# EUROPÄISCHE PATENTSCHRIFT

(11) **EP 1 626 859 B1**
(45) Veröffentlichungstag und Bekanntmachung des Hinweises auf die Patenterteilung: **26.11.2008**
(21) Anmeldenummer: 04739358.2
(22) Anmeldetag: 26.05.2004
(51) Int. Cl.: B29C 70/48

(54) **VERFAHREN ZUR HERSTELLUNG EINES FASERVERBUNDWERKSTOFF-BAUTEILS SOWIE ZWISCHENPRODUKT F R EIN SOLCHES VERFAHREN**
METHOD FOR THE PRODUCTION OF A FIBRE COMPOSITE MATERIAL COMPONENT AND INTERMEDIATE PRODUCT FOR SUCH A METHOD
PROCEDE DE PRODUCTION D'UNE PIECE ET PRODUIT INTERMEDIAIRE POUR LA MISE EN OEUVRE DUDIT PROCEDE

(30) Priorität: 26.05.2003 DE 10324141
(43) Veröffentlichungstag der Anmeldung: 22.02.2006
(73) Patentinhaber: EUROCOPTER DEUTSCHLAND GmbH, 86609 Donauwörth (DE)
(72) Erfinder: NOWACKI, Jan, 86609 Donauwörth (DE); WEIMER, Christian, 67715 Geiselberg (DE)
(74) Vertreter: Duschek, Horst Jürgen
(86) Internationale Anmeldenummer: PCT/EP2004/005649
(87) Internationale Veröffentlichungsnummer: WO 2004/103665

(56) Entgegenhaltungen:
- DE-A- 10 005 202
- DE-A- 10 156 875
- DE-A- 19 608 127
- GB-A- 2 333 738

## Beschreibung

### TECHNISCHES GEBIET

Die vorliegende Erfindung betrifft ein Verfahren zur Herstellung eines Faserverbundwerkstoff-Bauteils gemäß dem Oberbegriff des Anspruchs 1 sowie ein Zwischenprodukt für ein solches Verfahren.

### STAND DER TECHNIK

Es ist ein Verfahren zur Herstellung eines Faserverbundwerkstoff-Bauteils bekannt, bei dem mehrere Verstärkungsfaserlagen mittels eines Fadens zu Verstärkungsfaser-Vorformlingen vernäht und miteinander verbunden werden, wobei die Naht eine vorbestimmte Fadenspannung aufweist, und die Verstärkungsfaser-Vorformlinge durch das Vernähen kompaktiert werden, sowie die Verstärkungsfaser-Vorformlinge in einer großen Vielzahl in eine Injektionsform eingelegt, die Injektionsform geschlossen und ein Harz in die Injektionsform eingespritzt und das Harz ausgehärtet wird. Bei diesem vorbekannten Verfahren werden die Verstärkungsfaser-Vorformlinge durch das Vernähen auf bzw. im wesentlichen auf ein Endkompaktierungsmaß bzw. ein gewünschtes Dickenmaß kompaktiert.

Das zuvor beschriebene Verfahren gemäß dem Stand der Technik besitzt jedoch diverse Nachteile. So hat es sich gezeigt, dass bei dem Vernähen und Kompaktieren starke Umorientierungen oder sogar Zerstörungen der Verstärkungsfasern auftreten, was die Festigkeit des Faserverbundwerkstoff-Bauteils zum Teil drastisch herabsetzt. Dies ist besonders bei in der Luft- und Raumfahrtindustrie verwendeten Faserverbundwerkstoff-Bauteilen, die nicht nur leicht, sondern auch hochfest ausgebildet sein müssen, als negativ anzusehen. Ferner ist das Einlegen der Vielzahl von Verstärkungsfaser-Vorformlingen in die Injektionsform, was in einer richtigen Reihenfolge geschehen muss, sowie das Ausrichten derselben recht aufwendig, mühsam und zeitintensiv. Darüber hinaus hat es sich herausgestellt, dass es beim Verschließen der Injektionsform oftmals zu Problemen kommt. Bei einer nicht geschlossenen Injektionsform besteht jedoch die Gefahr, dass Harz ausläuft und das Verstärkungsmaterial nicht vollständig getränkt wird.

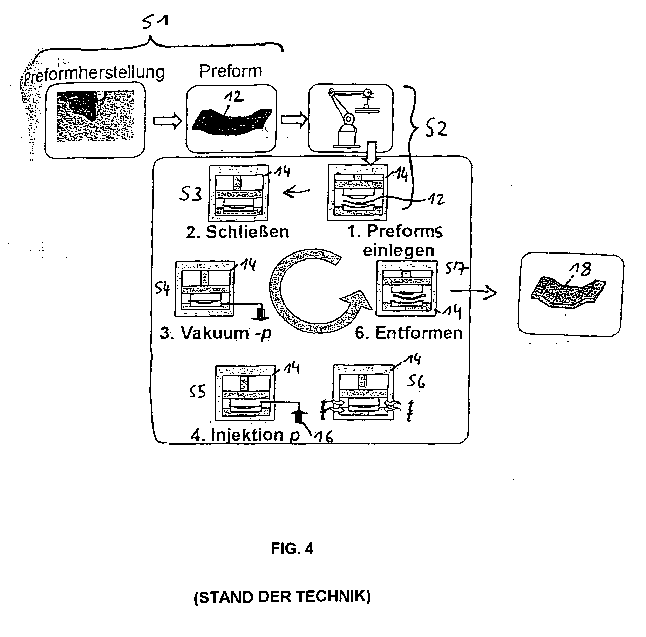

Es sind ferner nach dem RTM-Prinzip (resin transfer moulding) arbeitende Verfahren zur Herstellung eines Faserverbundwerkstoff-Bauteils bekannt, bei denen in einem separaten Kompaktierungsprozess Verstärkungsfaser-Vorformlinge (hier: Preforms genannt) hergestellt werden. Ein solches Verfahren ist in der Fig. 4 schematisch skizziert. Zur Fertigung der Preforms 12 werden eine oder mehrere geringfügig mit Harz angereicherte Verstärkungsfaserlagen über ein dem zu fertigenden Bauteil angepasstes, formgebendes Fertigungsmittel drapiert und ausgehärtet, so dass sich jeweils eine relativ eigenstabile Preform 12 ergibt (S1). Auf dieses Weise wird eine relativ hohe Anzahl von Preforms 12 hergestellt. Diese Preforms 12 werden dann nacheinander in einer richtigen Reihenfolge in eine Injektionsform 14 eingelegt (S2), die Injektionsform 14 geschlossen (S3), ein Vakkum bzw. niedriger Druck in der Injektionsform 14 aufgebaut (S4), ein Harz 16 in die Injektionsform eingespritzt (S5) und das eingespritzte Harz 16 ausgehärtet (S6). Anschließend kann das so hergestellte Faserverbundwerkstoff-Bauteil 18 der Form 14 entnommen werden (S7).

Auch bei diesem vorbekannten Verfahren ist das Einlegen der Vielzahl von Verstärkungsfaser-Vorformlingen in einer genau festgelegten Reihenfolge in die Injektionsform relativ aufwendig, mühsam und zeitintensiv, und es treten ebenfalls Probleme beim Verschließen der Injektionsform mit den bereits geschilderten nachteiligen Konsequenzen auf.

Aus der DE 196 08 127 A1 ist ein Verfahren zur Herstellung eines Faserverbundwerkstoff-Bauteils bekannt gemäß dem Oberbegriff des Anspruchs 1, bei dem mehrere Verstärkungsfaserlagen sowie lokale Verstärkungsteile mittels eines Fadens zu einem einzelnen, als Ganzes handhabbaren Verstärkungsfaser-Vorformling vernäht und miteinander verbunden werden gemäß dem Oberbegriff des Anspruchs 5. Die Verstärkungsteile werden nur im Bereich ihres Randes vernäht. Die Vernähung dient dazu, die Verstärkungsfaserlagen und die Verstärkungsteile aneinander zu fixieren und bei einem Transport, einer Lagerung sowie einem späteren räumlichen bzw. dreidimensionalen Umformen in einem Pressformwerkzeug eine Faserverschiebung der Verstärkungsfaserlagen oder eine Desorientierungen im Faserlagenaufbau zu vermeiden. Die dreidimensionale Umformung sowie die Konsolidierung im Pressformwerkzeug erfolgt unter Druck- und Wärmeeinwirkung.

### DARSTELLUNG DER ERFINDUNG

Der Erfindung liegt die Aufgabe beziehungsweise das technische Problem zugrunde, ein gattungsgemäßes Verfahren zur Herstellung eines Faserverbundwerkstoff-Bauteils zu schaffen, welches die dem Stand der Technik anhaftenden Nachteile möglichst weitgehend vermeidet und die Fertigung eines qualitativ hochwertigen Faserverbundwerkstoff-Bauteils mit verbesserten mechanischen Eigenschaften gestattet. Ferner soll ein geeignetes Zwischenprodukt zur Verwendung in einem solchen Verfahren bereitgestellt werden.

Diese Aufgabe wird gemäß einem ersten Aspekt gelöst durch ein erfindungsgemäßes Verfahren mit den Merkmalen des Anspruchs 1.

Dieses Verfahren zur Herstellung eines Faserverbundwerkstoff-Bauteils ist im Anspruch 1 definiert. Das Endkompaktieren kann in Abhängigkeit der Faseranordnungen der jeweiligen Verstärkungsfaser-Vorformlinge im zu fertigenden Bauteil in einer oder mehreren Richtungen erfolgen, pro Verstärkungsfaser-Vorformlinge oder einer aus mehreren Verstärkungsfaser-Vorformlingen gebildeten Vorformling-Untereinheit jedoch in einer einheitlichen Richtung.

Die Verstärkungsfaserlagen, bei denen es sich sowohl um gleichartige als auch unterschiedliche Fasergewebe oder -strukturen handeln kann (z.B. Glasfasergewebe, Kohlefasergewebe, oder auch unidirektionale Faseranordnungen usw.), werden vorzugsweise in einem trockenen Zustand vernäht. D.h., die Verstärkungsfaserlagen sind noch nicht mit einem Harz, welches ein lokales Haftmittel oder aber eine spätere Matrix bildet, versehen. Obwohl im Rahmen des erfindungsgemäßen Verfahrens das Faserverbundwerkstoff-Bauteil grundsätzlich mittels eines einzigen vernähten Verstärkungsfaser-Vorformlings oder einer einzigen, aus mehreren Verstärkungsfaser-Vorformlingen gebildeten Vorformling-Untereinheit, der/die in die Injektionsform eingelegt wird, hergestellt werden kann, ist es doch bevorzugt, eine bestimmte Anzahl von mehreren Verstärkungsfaser-Vorformlingen bzw. Vorformling-Untereinheiten zu verwenden und in die Injektionsform einzulegen, wie weiter unten noch näher erläutert werden wird.

Die zur Fertigung des Faserverbundwerkstoff-Bauteils verwendeten Verstärkungsfaser-Vorformlinge sind der Gestalt des zu fertigenden Bauteils bzw. bestimmter Bauteilbereiche und der Injektionsform entsprechend angepasst. Die einzelnen Verstärkungsfaser-Vorformlinge müssen jedoch nicht zwangsläufig jeweils eine gleiche oder gleichartige Form aufweisen. In Abhängigkeit der gewünschten Gestalt des Faserverbundwerkstoff-Bauteils können innerhalb dieses Bauteils vielmehr auch unterschiedliche Verstärkungsfaser-Vorformlinge bzw. Gruppen und Untereinheiten solcher Verstärkungsfaser-Vorformlinge Anwendung finden. Die jeweiligen Verstärkungsfaser-Vorformlinge werden zweckmäßigerweise in einer geeigneten Reihenfolge bzw. nach einem vorbestimmten Anordnungs- oder Verlegemuster in die Injektionsform eingelegt. Die eingelegten Verstärkungsfaser-Vorformlinge bzw. -Vorformlinggruppen können sich innerhalb der Injektionsform sowohl vollständig als auch nur teilweise überlappen.

Das erfindungsgemäße Verfahren ermöglicht es auf einfache, effektive und vorteilhafte Art und Weise, die dem Stand der Technik anhaftenden Nachteile weitgehendst zu vermeiden und ein qualitativ hochwertiges Faserverbundwerkstoff-Bauteil mit verbesserten mechanischen Eigenschaften zu erzielen.

Die Erfinder des vorliegenden neuartigen Verfahrens haben erkannt, dass bei Verfahren gemäß dem Stand der Technik, bei denen die Verstärkungsfaserlagen durch Vernähen bereits auf ein Endmaß bzw. Endkompaktierungsmaß endkompaktiert werden, starke Umorientierungen oder sogar Zerstörungen der Verstärkungsfasern insbesondere im Bereich der Naht und der beim Vernähen zwangsläufig entstehenden Nähfadenlöcher auftreten und aufgrund der gegebenen Verfahrensschritte und -abläufe nicht mehr reversibel sind. Zusätzlich zu den aus den Umorientierungen der Verstärkungsfasern resultierenden Nachteilen führen die Nähfadenlöcher jedoch auch zu relativ großen, trichterartigen Einbuchtungen in der Kontur der Verstärkungsfaser-Vorformlinge. In diesen Einbuchtungen können sich beim anschließenden Einspritzen des Harzes unverstärkte und damit sehr spröde bzw. brüchige Harzansammlungen bilden, was der Festigkeit des Bauteils ebenfalls abträglich ist.

Bei der erfindungsgemäßen Lösung hingegen stellt das durch das Vernähen erfolgende Vorkompaktieren zunächst einmal sicher, dass die einzelnen Verstärkungsfaserlagen hinreichend fest und unverschieblich miteinander verbunden und in Gestalt von mindestens einem Verstärkungsfaser-Vorformling leicht in die Injektionsform einzulegen sind. Da der Verstärkungsfaser-Vorformling (bzw. die Vorformling-Untereinheit) noch nicht sein endgültiges Dicken- oder Materialstärkenmaß besitzt, wird er beim Verschließen der Form noch weiter zusammengedrückt und erst hierbei auf sein Endkompaktierungsmaß endkompaktiert. Dadurch wird die Enddicke des Verstärkungsmaterials eingestellt.

Es ist leicht nachvollziehbar, dass sich hierbei die Naht, die durch den vorangegangenen Nähvorgang unter einer vorbestimmten Fadenspannung steht, entspannen kann, da sich ja die ursprüngliche Dicke des Verstärkungsfaser-Vorformlings (bzw. der Vorformling-Untereinheit) durch das Endkompaktieren verringert, die vernähte Fadenlänge jedoch gleich bleibt. Der Entspannungseffekt wird bei Verwendung eines Fadens mit einem hohen Relaxationsvermögen natürlich noch verstärkt. Dieses Entspannen der Naht hat zur Folge, dass der Nahtfaden im Bereich eines Nadeleinstichs bzw. der dort entstehenden Nähfadenlöcher die Verstärkungsfasern nicht mehr bzw. nicht mehr so stark einschnüren und umorientieren kann. Ungünstige Faserverläufe oder sogar eine Zerstörung der Fasern sind daher wirkungsvoll vermeidbar.

Die entspannte Naht (die bei heutigen Nähtechniken üblicherweise aus einem Ober- und einem Unterfaden besteht) nimmt deshalb bei Betrachtung des vernähten Verstärkungsfaser-Vorformlings im Querschnitt einen nahezu rechteckigen Naht- bzw. Fadenverlauf ein. Daraus resultierend wiederum können sich die beim Stand der Technik auftretenden, relativ großen trichterartigen Einbuchtungen in der Kontur des Verstärkungsfaser-Vorformlings (bzw. in der Kontur und Struktur der Vorformling-Untereinheit) nicht mehr ausbilden. Folglich können sich beim anschließenden Einspritzen des Harzes auch keine großen, unverstärkten Harzansammlungen mehr bilden. Die Festigkeit des mit dem erfindungsgemäßen Verfahren hergestellten Faserverbundwerkstoff-Bauteils kann deshalb beträchtlich erhöht werden.

Es ist hervorzuheben, dass sich die zuvor erläuterten Vorteile auch dann erzielen lassen, wenn eine vergleichsweise große Anzahl von Verstärkungsfaserlagen zu einem Verstärkungsfaser-Vorformling vernäht wird.

Zur Herstellung eines Faserverbundwerkstoff-Bauteils ist daher nur eine vergleichsweise geringe Anzahl von Verstärkungsfaser-Vorformlingen (bzw. Vorformling-Untereinheiten) erforderlich, die einfach, rasch und rationell nacheinander in die Injektionsform eingelegt und dort ausgerichtet werden kann. Die geringe Anzahl erforderlicher Verstärkungsfaser-Vorformlinge (bzw. Vorformling-Untereinheiten) verhindert gleichzeitig ein übermäßiges Verrutschen oder Verschieben der Verstärkungsfaser-Vorformlinge in der Injektionsform, was beim Verschließen der Injektionsform ein Verklemmen derselben durch überstehende Faser- oder Vorformlingbereiche reduziert und die Notwendigkeit einer Nachbearbeitung der Verstärkungsfaser-Vorformlinge (bzw. Vorformling-Untereinheiten) beseitigt. Auch die durch das Vorkompaktieren auf ein Vorkompaktierungsmaß, welches noch nicht dem endültigen Dickenmaß des Verstärkungsmaterials entspricht, gegebene Komprimierbarkeit der Verstärkungsfaser-Vorformlinge (bzw. Vorformling-Untereinheiten) erleichtert ein Verschließen der Form.

Während bereits auf ein Endmaß kompatierte vernähte Verstärkungsfaser-Vorformlinge oder in einem separaten Prozess kompaktierte, aus mit Harz angereicherten Verstärkungsfaserlagen hergestellte Preforms ein Verschließen der Injektionsform blockieren können, weil das bereits endgültige Dickenmaß dieser Elemente aufgrund stets auftretender Fertigungstoleranzen nicht mit dem Schließmaß der Injektionsform korrespondiert, lassen sich bei dem erfindungsgemäßen Verfahren die eingelegten Verstärkungsfaser-Vorformlinge beim Schließen der Injektionsform noch leicht zusammendrücken. Dies gestattet nicht nur ein problemfreies Schließen der Injektionsform und verringert die Gefahr von aus der Injektionsform auslaufendem Harz und einer mangelnden Durchtränkung des Verstärkungsmaterials, sondern gestattet auf vorteilhafte Weise auch eine maßtolerante Fertigungsweise, ohne hierbei die Festigkeit des herzustellenden Faserverbundwerkstoff-Bauteils zu beeinträchtigen.

Weitere bevorzugte und vorteilhafte Ausführungsmerkmale des erfindungsgemäßen Verfahrens sind Gegenstand der Unteransprüche 2 bis 4.

Die der Erfindung zugrunde liegende Aufgabe wird gemäß einem zweiten Aspekt gelöst durch ein erfindungsgemäßes Zwischenprodukt mit den Merkmalen des Anspruchs 5. Es ist zu beachten, dass unter "einer" Naht im Sinne der Erfindung natürlich nicht nur eine einzige Naht zu verstehen ist, sondern je nach Ausführungsform eine oder mehrere Nähte.

Mit dem erfindungsgemäßen Zwischenprodukt sind im wesentlichen die gleichen Vorteile zu erzielen, die bereits weiter oben im Zusammenhang mit dem erfindungsgemäßen Verfahren erläutert wurden.

Ein bevorzugtes Ausgestaltungsmerkmal des erfindungsgemäßen Zwischenproduktes ist Gegenstand des Unteranspruchs 6.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: einen schematischen, stark vereinfachten Querschnitt durch ein erfindungsgemäßes Zwischenprodukt in einem ersten Stadium des erfindungsgemäßen Verfahrens; und
- Fig. 2: einen schematischen, stark vereinfachten Querschnitt durch das erfindungsgemäße Zwischenprodukt von Fig. 1 in einem zweiten Stadium des erfindungsgemäßen Verfahrens;
- Fig. 3: einen schematischen, stark vereinfachten Querschnitt durch einen Teilbereich eines nach einem ersten Verfahren gemäß dem Stand der Technik gefertigten Faserverbundwerkstoff-Bauteils; und
- Fig. 4: ein schematische Darstellung eines zweiten vorbekannten Verfahrens zur Herstellung eines Faserverbundwerkstoff-Bauteils gemäß dem Stand der Technik.

### DARSTELLUNG VON BEVORZUGTEN AUSFÜHRUNGSBEISPIELEN

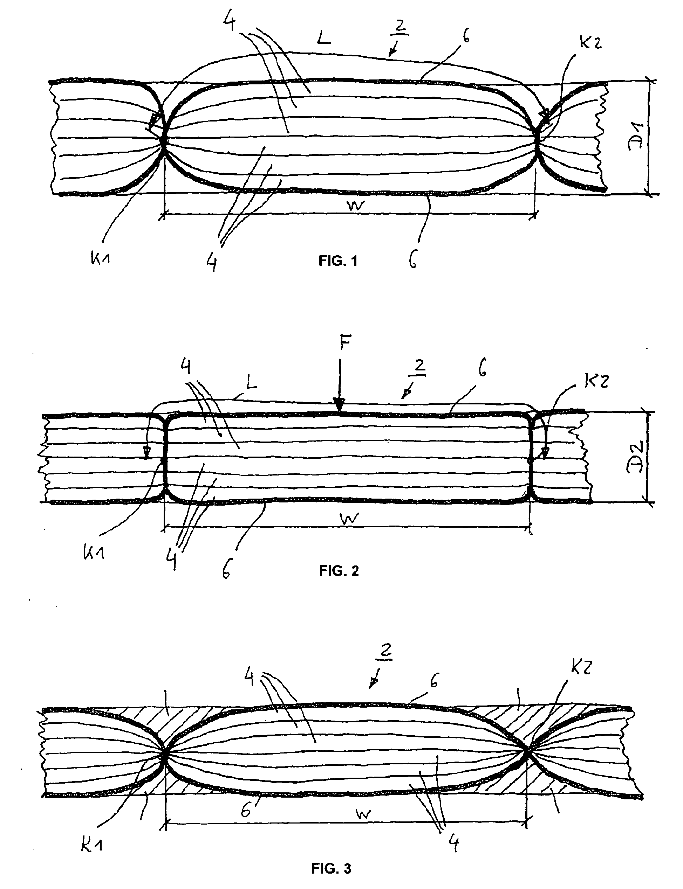

In der Fig. 1 ist in einem schematischen Querschnitt ein erfindungsgemäßes Zwischenprodukt in einem ersten Stadium des erfindungsgemäßen Verfahrens dargestellt. Fig. 2 zeigt einen schematischen Querschnitt durch das erfindungsgemäße Zwischenprodukt von Fig. 1 in einem zweiten Stadium des erfindungsgemäßen Verfahrens. Wie in diesen Zeichnungen erkennbar, umfasst das erfindungsgemäße Zwischenprodukt mindestens einen Verstärkungsfaser-Vorformling 2, der mehrere übereinander liegende Verstärkungsfaserlagen 4 aufweist, die durch eine Naht 6, sprich einen vernähten Faden (hier: Ober- und Unterfaden), miteinander vernäht bzw. verbunden sind. Durch das Vernähen ist der Verstärkungsfaser-Vorformling 2 auf eine Verstärkungsmaterialdicke bzw. ein Vorkompaktierungsmaß D1, bei dem die Naht 6 eine vorbestimmte Fadenspannung besitzt, vorkompaktiert (vgl. Fig. 1). Ausgehend von diesem Vorkompaktierungsmaß D1 und der vorbestimmten Fadenspannung ist der Verstärkungsfaser-Vorformling 2 weiter auf eine Enddicke bzw. ein Endkompaktierungsmaß D2, bei dem die Naht gegenüber dem in Fig. 1 gezeigten Zustand entspannt ist, endkompaktierbar (vgl. Fig. 2). Bei dem erfindungsgemäßen Zwischenprodukt können zwei oder mehrere vorkompaktierte Verstärkungsfaser-Vorformlinge 2 zu einer vorkompaktierten Vorformling-Untereinheit vernäht sein.

Das erfindungsgemäße Zwischenprodukt kann im Rahmen des erfindungsgemäßen Verfahrens zur Herstellung eines Faserverbundwerkstoff-Bauteils Anwendung finden.

Bei dem erfindungsgemäßen Verfahren werden zunächst einmal mehrere, auf die Form des herzustellenden Faserverbundwerkstoff-Bauteils sowie eine im Rahmen des erfindungsgemäßen Verfahrens verwendete Injektionsform abgestimmte Verstärkungsfaserlagen 4 bereitgestellt. Diese Verstärkungsfaserlagen 4 werden mittels eines Fadens bzw. einer Naht 6 zu Verstärkungsfaser-Vorformlingen vernäht und dadurch miteinander verbunden. Durch das Vernähen der Verstärkungsfaserlagen 4, was z.B. unter einer geeigneten Druckeinwirkung auf die Verstärkungsfaserlagen 4 und mit einer an einer geeigneten Nähvorrichtung einstellbaren Nähfadenspannung erfolgt, wird der jeweilige Verstärkungsfaser-Vorformling 2 zunächst auf das Vorkompaktierungsmaß D1 vorkompaktiert. Dieses Maß D1 entspricht noch nicht der endgültigen Verstärkungsmaterialdicke. D.h., der Verstärkungsfaser-Vorformling 2 ist noch ohne größere Kraftanwendung weiter komprimierbar. In diesem Zustand, der in Fig. 1 dargestellt ist, weist die fertige Naht 6 eine vorbestimmte Fadenspannung auf, die insbesondere durch nähtechnische Parameter und die Tendenz der vernähten Verstärkungsfaserlagen 4, auseinander zu streben, bestimmt ist.

Obwohl es nicht zwingend erforderlich ist, wird in diesem Ausführungsbeispiel das Vernähen der Verstärkungsfaserlagen 4 und das Vorkompaktieren der jeweiligen Verstärkungsfaser-Vorformlinge 2 mittels eines Fadens ausgeführt, der ein hohes Relaxationsvermögen besitzt. Dies verbessert das anschließende Entspannen der Naht 6.

Grundsätzlich können die mehreren Verstärkungsfaserlagen 4 vor, während oder nach dem Vorkompaktieren auch an einer oder mehreren Stellen z.B. punktuell durch ein Haftmittel, wie z.B. ein thermoplatisches Harz oder dergleichen, provisorisch miteinander verbunden bzw. aneinander fixiert werden. In der Regel ist dies jedoch nicht erforderlich.

Die jeweiligen Verstärkungsfaser-Vorformlinge 2 besitzen nun im wesentlichen den in Fig. 1 dargestellten Zustand. Die hergestellten Verstärkungsfaser-Vorformlinge 2 können entweder sogleich einzeln weiteren Verfahrensschritten zugeführt werden oder aber noch vor dem Einlegen in die Injektionsform zu vorkompaktierten Vorformling-Untereinheiten vernäht werden.

Ausgehend von der in Fig. 1 gezeigten Konfiguration werden die Verstärkungsfaser-Vorformlinge 2 (bzw. die Vorformling-Untereinheiten) nacheineinander lose in eine verschließbare Injektionsform eingelegt, die beispielweise ein Unterteil und ein daran fixierbares Oberteil aufweisen kann. Dann wird die Injektionsform verschlossen. Hierbei drückt das Oberteil auf die eingelegten Verstärkungsfaser-Vorformlinge 2 (bzw. Vorformling-Untereinheiten) und kompaktiert diese in einer im wesentlichen senkrecht zur Hauptfaserrichtung verlaufenden Richtung weiter, wie in der Fig. 2 durch einen einzelnen Kraftvektor F angedeutet ist. Durch das Schließen der Injektionsform werden die Verstärkungsfaser-Vorformlinge 2 (bzw. die Vorformling-Untereinheiten) somit auf das Endkompaktierungsmaß D2 (mit D2 < D1) endkompaktiert. Vorzugsweise beträgt das Endkompaktierungsmaß D2 ca. 70 bis 90 %, insbesondere 75 bis 80% des Vorkompaktierungsmaßes D1. Je nach Anwendungsfall kann jedoch von diesen Werten um einige Prozent abgewichen werden. Durch dieses Endkompaktieren wird die unter der vorbestimmten Fadenspannung stehende Naht 6 eines jeweiligen Verstärkungsfaser-Vorformlings 2 entspannt. Dieser Zustand ist in der Fig. 2 für einen einzelnen Verstärkungsfaser-Vorformling 2 angedeutet.

Durch einen Vergleich der Fig. 1 und 2 wird das der Erfindung zugrunde liegende Entspannungsprinzip noch leichter nachvollziehbar. Im vorkompaktierten Zustand (Fig. 1) sind die Verstärkungsfasern der vernähten Verstärkungsfaserlagen 4 durch die Nähte 6, welche unter einer vergleichsweise hohen Fadenspannung stehen, noch relativ stark eingeschnürt und umorientiert. Zwischen zwei benachbarten Nahtknoten K1, K2 besitzen die Nähte 6 einen bogenartigen Fadenverlauf. Die Fadenteillänge L zwischen zwei benachbarten Nahtknoten K1, K2 (die beim Nähen durch die Stichweite W bestimmt wird) ist im wesentlichen konstant. Beim Endkompaktieren verringert sich die Dicke des jeweiligen Verstärkungsfaser-Vorformlings 2 (bzw. der jeweiligen Vorformling-Untereinheit) ausgehend von dem Vorkompaktierungsmaß D1 auf das Vorkompaktierungsmaß D2.

Der Abstand der zwei benachbarten Nahtknoten K1, K2 sowie die Fadenteillänge L zwischen den Nahtknoten K1, K2 bleibt jedoch weiterhin im wesentlichen gleich. Bezogen auf das Endkompaktierungsmaß M2 ist die Fadenteillänge L nun gewissermaßen zu lang. Dadurch wird die zuvor noch unter der relativ hohen Fadenspannung stehende Naht 6 etwas lose und damit erheblich entspannt. Die ursprünglich insbesondere im Nahtknotenbereich stark zusammengedrückten und umorientierten Verstärkungsfasern können sich nun wieder weitgehend in einen Zustand zurückstellen, der einem Zustand vor dem Vernähen entspricht. Die entspannte Naht 6 nimmt einen nahezu rechteckigen Naht- bzw. Fadenverlauf ein. Es ist ersichtlich, dass im Bereich der Nähfadenlöcher somit nur noch eine sehr kleine Einbuchtung in der Kontur des Verstärkungsfaser-Vorformlings 2 (bzw. in der Kontur und Struktur der Vorformling-Untereinheit) verbleibt, in der sich keine großen Harzansammlungen mit den damit verbundenen Nachteilen mehr bilden können.

Nach dem Endkompaktieren wird ein geeignetes Harz, z.B. ein Epoxydharz, in die Injektionsform eingespritzt und das Harz z.B. unter Wärmeeinwirkung ausgehärtet. Nach dem Aushärten kann das so hergestellte Faserverbundwerkstoff-Bauteil der Injektionsform entnommen und ggf. weiteren Bearbeitungsschritten zugeführt werden.

Mit Hilfe des erfindungsgemäßen Verfahrens lassen sich beispielsweise leichte und hochfeste Flugzeugtür-Traglenker oder auch andere Faserverbundwerkstoff-Bauteil herstellen.

Je nach Art des herzustellenden Faserverbundwerkstoff-Bauteils wird bei dem erfindungsgemäßen Verfahren die Anzahl der benötigten Verstärkungsfaser-Vorformlinge 2 (bzw. Vorformling-Untereinheiten)) natürlich variieren. Bezogen auf die Gesamtanzahl der für das zu fertigende Faserverbundwerkstoff-Bauteil oder einen Bauteilbereich davon in die Injektionsform einzulegenden Verstärkungsfaserlagen 4 weist bei dem erfindungsgemäßen Verfahren jedoch vorzugsweise jeder der in die Injektionsform eingelegten Verstärkungsfaser-Vorformlinge 2 (bzw. Vorformling-Untereinheiten) im Durchschnitt 10 % bis 25 %, insbesondere 10% bis 20% der Gesamtanzahl der einzulegenden Verstärkungsfaserlagen (oder mit anderen Worten: der Gesamtzahl der zum Aufbau des Bauteils oder eines bestimmten Bauteilbereichs erforderlichen Verstärkungsfaserlagen) auf. Wenn für das Bauteil also beispielsweise insgesamt 100 übereinander angeordnete Verstärkungsfaserlagen 4 benötigt werden, so sind zum Aufbau des Bauteils nur 4 bis 10 bzw. 5 bis 10 übereinander liegende Verstärkungsfaser-Vorformlinge 2 (bzw. Vorformling-Untereinheiten) notwendig.

Es hat sich herausgestellt, dass beispielweise zur Herstellung eines Flugzeugtür-Traglenkers mittels des erfindungsgemäßen Verfahrens nur 7 bis 8 Verstärkungsfaser-Vorformlinge (bzw. Vorformling-Untereinheiten) erforderlich sind, im Vergleich zu ca. 100 Vorformlingen bei einem vorbekannten Verfahren. Dies stellt eine erhebliche Arbeitserleichterung und Rationalisierung bei gleichzeitig verbesserten mechanischen Eigenschaften dar. Ferner ermöglicht die geringe Anzahl der in die Injektionsform einzulegenden Verstärkungsfaser-Vorformlinge 2 (bzw. Vorformling-Untereinheiten), dass diese bei Bedarf noch leicht gegeneinander zu verschieben und auszurichten sind.

Fig. 3 zeigt zum Vergleich einen schematischen, stark vereinfachten Querschnitt durch einen Teilbereich eines nach einem Verfahren gemäß dem Stand der Technik gefertigten Faserverbundwerkstoff-Bauteils, mit einem Verstärkungsfaser-Vorformling 2 bei dem die Verstärkungsfaserlagen 4 ebenfalls mittels einer Naht 6 miteinander vernäht wurden. Es ist ersichtlich, dass hier die Verstärkungsfasern stark umorientiert und im Bereich der Nähfadenlöcher relativ große, trichterartige Einbuchtungen 8 mit spröden bzw. brüchigen Harzansammlungen 10 (schraffiert eingezeichnet) vorhanden sind.

Die Erfindung ist nicht auf die obigen Ausführungsbeispiele, die lediglich der allgemeinen Erläuterung des Kerngedankens der Erfindung dienen, beschränkt. Im Rahmen des Schutzumfangs kann das erfindungsgemäße Verfahren vielmehr auch andere als die oben konkret beschriebenen Ausführungsformen annehmen. Insbesondere ist es möglich, das Endkompaktieren als solches erst dann auszuführen, wenn die Injektionsform bereits geschlossen ist. Dies kann zum Beispiel dadurch geschehen, dass innerhalb der Injektionsform z.B. eine druckbeaufschlagbare Membrane oder ein verschiebbares Wandungselement angeordnet ist, welche/s erst im geschlossen Zustand der Injektionsform aktiviert wird und dann auf die eingelegten Verstärkungsfaser-Vorformlinge drückt und diese endkompaktiert. Im Sinne der Erfindung ist "ein Endkompaktieren durch Schließen der Injektionsform" also weiter gefasst zu verstehen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 2: Verstärkungsfaser-Vorformling
- 4: Verstärkungsfaserlagen von 2
- 6: Naht / Faden
- 8: Trichterartige Einbuchtungen (beim Stand der Technik)
- 10: Harzansammlungen (beim Stand der Technik)
- 12: Preform (beim Stand der Technik)
- 14: Injektionsform (beim Stand der Technik)
- 16: Harz (beim Stand der Technik)
- 18: Bauteil (Stand der Technik)

- D1: Vorkompaktierungsmaß
- D2: Endkompaktierungsmaß
- F: Druckkraft zum Endkompaktieren
- K1: Nahtknoten von 6
- K2: Nahtknoten von 6
- L: Fadenteillänge zwischen K1 und K2
- S1 - S7: Verfahrensschritte (beim Stand der Technik)
- W: Stichweite von 6

## Patentansprüche

1. Verfahren zur Herstellung eines Faserverbundwerkstoff-Bauteils, bei dem
- mehrere Verstärkungsfaserlagen (4) mittels eines Fadens (6) zu Verstärkungsfaser-Vorformlingen (2) vernäht und miteinander verbunden werden, wobei die Naht (6) eine vorbestimmte Fadenspannung aufweist, und die Verstärkungsfaser-Vorformlinge (2) durch das Vernähen auf ein Vorkompaktierungsmaß (D1) vorkompaktiert werden,
- die Verstärkungsfaser-Vorformlinge (2) in eine Injektionsform eingelegt, die Injektionsform geschlossen und die Verstärkungs-Vorformlinge (2) auf ein Endkompaktierungsmaß (D2) endkompaktiert werden, sowie
- ein Harz in die Injektionsform eingespritzt und das Harz ausgehärtet wird,
**dadurch gekennzeichnet, dass**
- die in die Injektionsform eingelegten Verstärkungsfaser-Vorformlinge (2) durch das Schließen der Injektionsform auf 70 % bis 90% des Vorkompaktierungsmaßes (D1) endkompaktiert (F) werden, und
- die unter der vorbestimmten Fadenspannung stehende Naht (6) durch dieses Endkompakieren zu einer einen nahezu rechteckigen Naht- bzw. Fadenverlauf aufweisenden Naht (6) entspannt wird.

2. Verfahren nach Anspruch 1, **dadurch gekennzeichnet, dass** die mehreren Verstärkungsfaserlagen (4) vor, während oder nach dem Vorkompaktieren an einer oder mehreren Stellen durch ein Haftmittel provisorisch miteinander verbunden werden.

3. Verfahren nach einem oder mehreren der vorher genannten Ansprüche, **dadurch gekennzeichnet, dass** vor dem Einlegen in die Injektionsform mehrere vorkompaktierte Verstärkungsfaser-Vorformlinge (2) zu vorkompaktierten Vorformling-Untereinheiten vernäht werden.

4. Verfahren nach einem oder mehreren der vorher genannten Ansprüche, **dadurch gekennzeichnet, dass** bezogen auf die Gesamtanzahl der für das zu fertigende Faserverbundwerkstoff-Bauteil oder einen Bauteilbereich davon in die Injektionsform einzulegenden Verstärkungsfaserlagen (4) jeder der in die Injektionsform eingelegten Verstärkungsfaser-Vorformlinge (2) bzw. Vorformling-Untereinheiten im Durchschnitt 10 % bis 25 %, insbesondere 10 % bis 20 % der Gesamtanzahl dieser Verstärkungsfaserlagen (4) aufweist.

5. Zwischenprodukt, insbesondere zur Verwendung in einem Verfahren nach einem oder mehreren der Ansprüche 1 bis 4, umfassend: mindestens einen Verstärkungsfaser-Vorformling (2), der mehrere durch eine Naht (6) miteinander vernähte Verstärkungsfaserlagen (4) aufweist und durch das Vernähen auf ein Vorkompaktierungsmaß (D1), bei dem die Naht (6) eine vorbestimmte Fadenspannung besitzt, vorkompaktiert ist, **dadurch gekennzeichnet, dass** das Zwischenprodukt weiter auf ein Endkompaktierungsmaß (D2) von 70% bus 90% des Vorkompaktierungsmaßes, bei dem ausgehend von der vorbestimmten Fadenspannung die Naht (6) zu einer einen nahezu rechteckigen Naht- bzw. Fadenverlauf aufweisenden Naht (6) entspannt ist, endkompaktierbar (F) ist.

6. Zwischenprodukt nach Anspruch 5, **gekennzeichnet durch** zwei oder mehrere vorkompaktierte Verstärkungsfaser-Vorformlinge (2), die zu einer vorkompaktierten Vorformling-Untereinheit vernäht sind.

## Claims

1. A method for producing a fibre-composite-material component, in which
- a plurality of reinforcing-fibre layers (4) are sewn up and connected together by means of a thread (6) to form reinforcing-fibre preforms (2), wherein the seam (6) has a predetermined thread tension, and the reinforcing-fibre preforms (2) are precompacted by sewing up to a precompaction measure (D1),
- the reinforcing-fibre preforms (2) are inserted into an injection mould, the injection mould is closed, ' and the reinforcing preforms (2) undergo final compaction to a final compaction measure (D2), and also
- a resin is injected into the injection mould and the resin is hardened,
**characterised in that**
- the reinforcing-fibre preforms (2) that are inserted into the injection mould undergo final compaction (F) by closing the injection mould to 70% to 90% of the precompaction measure (D1), and
- the seam (6) that is under the predetermined thread tension is relaxed by this final compaction to form a seam (6) that has an almost rectangular seam- or thread-course.

2. A method according to claim 1, **characterised in that** the plurality of reinforcing-fibre layers (4) are provisionally connected together before, during or after the precompaction at one or more points by means of an adhesive agent.

3. A method according to one or more of the aforementioned claims, **characterised in that** before the insertion into the injection mould a plurality of precompacted reinforcing-fibre preforms (2) are sewn up to form precompacted preform sub-units.

4. A method according to one or more of the aforementioned claims, **characterised in that** relative to the total number of reinforcing-fibre layers (4) to be inserted into the injection mould for the fibre-composite-material component that is to be made, or a component region thereof, each of the reinforcing-fibre preforms (2) or preform sub-units inserted into the injection mould has on average 10% to 25%, in particular 10% to 20%, of the total number of these reinforcing-fibre layers (4).

5. Intermediate product, in particular for use in a method according to one or more of claims 1 to 4, comprising: at least one reinforcing-fibre preform (2) which has a plurality of reinforcing-fibre layers (4) that are sewn up together by means of a seam (6) and is precompacted by sewing up to a precompaction measure (D1), at which the seam (6) has a predetermined thread tension, **characterised in that** the intermediate product can further undergo final compaction (F) to a final compaction measure (D2) of 70% to 90% of the precompaction measure, in which case, starting from the predetermined thread tension, the seam (6) is relaxed to form a seam (6) that has an almost rectangular seam- or thread-course.

6. Intermediate product according to claim 5, **characterised by** two or more precompacted reinforcing-fibre preforms (2) that are sewn up to form a precompacted preform sub-unit.

## Revendications

1. Procédé de réalisation d'une pièce en matière composite renforcée par des fibres selon lequel:
- on réunit par couture plusieurs couches de fibres de renforcement (4) à l'aide d'un fil (6) pour obtenir des ébauches de fibres de renforcement (2) et on les relie,
- la couture (6) a une tension de fil prédéfinie, et
- les ébauches de fibres de renforcement (2) sont précompactées par la couture réalisée, à une dimension de précompactage (D1),
- on place les ébauches de fibres de renforcement (2) dans un moule d'injection, on ferme le moule d'injection et on compacte en définitive les ébauches de renforcement (2) à une dimension finale de compactage (D2), et
- on injecte une résine dans le moule d'injection et on la laisse durcir,
**caractérisé en ce que**
- on compacte (F) à la dimension définitive (D1), les ébauches de fibres de renforcement (2) placées dans le moule d'injection en le fermant pour arriver de 70 % à 90 % de la masse précompactée, et
- on détend la couture (6) mise à la tension prédéfinie du fil par ce compactage final pour obtenir une couture (6) qui présente un profil de couture ou de fil pratiquement rectangulaire.

2. Procédé selon la revendication 1,
**caractérisé en ce qu'**
on relie provisoirement les diverses couches de fibres de renforcement (6) avant, pendant et après le précompactage en un ou plusieurs endroits, de façon provisoire à l'aide d'un adhésif.

3. Procédé selon l'une des revendications précédentes,
**caractérisé en ce que**
avant de les placer dans le moule d'injection, on coud plusieurs ébauches de fibres de renforcement (2) précompactées, pour obtenir des unités d'ébauches précompactées.

4. Procédé selon l'une des revendications précédentes,
**caractérisé en ce que**
par rapport au nombre total du composant de matière composite renforcée par des fibres à fabriquer ou à une partie de composant des couches de fibres de renforcement (4) à placer dans le moule d'injection, chaque ébauche de fibres de renforcement (2) à placer dans le moule d'injection ou chaque sous-ensemble d'ébauches représente en moyenne entre 10 % et 25 % notamment entre 10 % et 20 % du nombre total de fibres de renforcement (4).

5. Produit intermédiaire notamment destiné à un procédé selon les revendications 1 à 4,
comprenant:
au moins une ébauche de fibres de renforcement (2) ayant plusieurs couches de fibres de renforcement (4) cousues entre elles par une couture (6), et on précompacte par la couture à une dimension de précompactage (D1) pour laquelle la couture (6) possède une tension de fil, prédéfinie,
**caractérisé en ce que**
le produit intermédiaire est compacté en plus (F) de façon définitive à la dimension du compactage définitif (D2) représentant entre 70 % et 90 % de la mesure de précompactage, pour laquelle, partant d'une tension de fil prédéfinie, on détend la couture (6) pour avoir une couture (6) qui présente pratiquement un profil de couture ou de fil pratiquement rectangulaire.

6. Produit intermédiaire selon la revendication 5,
**caractérisé par**
deux ou plusieurs ébauches de fibres de renforcement (2), précompactées et cousues pour former une sous-unité d'ébauches précompactées.
